# EUROPÄISCHE PATENTSCHRIFT

(11) **EP 1 458 596 B1**
(45) Veröffentlichungstag und Bekanntmachung des Hinweises auf die Patenterteilung: **10.01.2007**
(21) Anmeldenummer: 02795014.6
(22) Anmeldetag: 17.12.2002
(51) Int. Cl.: B60S 1/04

(54) **BEFESTIGUNG EINER WISCHERANLAGE**
FIXATION OF A WIPER SYSTEM
FIXATION D'UN SYSTEME D'ESSUIE-GLACE

(30) Priorität: 17.12.2001 DE 10161976
(43) Veröffentlichungstag der Anmeldung: 22.09.2004
(73) Patentinhaber: ROBERT BOSCH GMBH, 70442 Stuttgart (DE)
(72) Erfinder: KALCHSCHMIDT, Peter, 76646 Bruchsal Untergromb. 6 (DE); KARLE, Marc-Oliver, 70376 Stuttgart (DE); REISER, Christian, 76275 Ettlingen (DE)
(86) Internationale Anmeldenummer: PCT/DE2002/004625
(87) Internationale Veröffentlichungsnummer: WO 2003/051689

(56) Entgegenhaltungen:
- EP-A- 0 916 559
- EP-A- 1 040 972
- DE-A- 19 833 158
- DE-A- 19 833 488
- GB-A- 2 347 340
- US-B1- 6 254 167
- US-B1- 6 317 918

## Beschreibung

### Stand der Technik

Die Erfindung geht von einer Befestigung einer Wischeranlage nach dem Oberbegriff des Anspruchs 1 aus.

Wischeranlagen für Kraftfahrzeuge werden mit einem Wischerträger, einer so genannten Platine bzw. Rohrplatine - wenn der Wischerträger Elemente aus Rohren enthält -, an der Fahrzeugkarosserie eines Kraftfahrzeugs befestigt. Die Platine umfasst eine Motorplatine, die einen Wischerantrieb mit einem Wischermotor und einem daran angebauten Getriebe trägt. Antriebswellen der Scheibenwischer sind in Wischerlagern gelagert, deren Lagergehäuse an den Enden der Platine befestigt oder angeformt sind. Die Platine ist über Befestigungsaugen, die am Lagergehäuse, an der Platine und/oder der Motorplatine angeformt sind, durch Schrauben an einer Fahrzeugkarosserie befestigt.

Das aus der Fahrzeugkarosserie vorstehende Ende der Antriebswelle stellt bei Unfällen mit Fußgängern eine erhebliche Gefahrenquelle für Verletzungen dar. Entwürfe für Crash-Vorschriften der europäischen Kommission (EC III/5021/96 EN) definieren in Bezug auf Unfälle mit Fußgängern maximale Beschleunigungswerte, so genannte Kopfverletzungskriterien, im Bereich der Fahrzeughaube an der Wischeranlage. Diese Kriterien sind mit den üblichen Wischeranlagen nicht zu erreichen, selbst wenn die Fahrzeughaube die Antriebswelle überdeckt, da auch in diesem Fall nicht sichergestellt ist, dass der Abstand zwischen der Fahrzeughaube und der Antriebswelle, insbesondere bei geringen Haubenspalten, groß genug ist.

Eine Möglichkeit zur Abhilfe besteht darin, dass das Ende der Antriebswelle bei einer axialen Stoßbeanspruchung nachgibt und in ihrer Lagerung axial in den Motorraum verschoben wird. Aus der EP 1 040 972 A2 ist eine Befestigung einer Wischeranlage bekannt, bei der das Lagergehäuse der Antriebswelle über ein elastisches Element mit der Fahrzeugkarosserie verbunden und bei einer Stoßbelastung von der Halterung lösbar ist. Das elastische Element ist in einem Lagerauge seitlich des Lagergehäuses formschlüssig über eine Ringnut gehalten. Es besteht aus Kunststoff mit einer Shore-Härte von 60 bis 70 und besitzt eine konische Öffnung, mit der es auf einem an der Fahrzeugkarosserie befestigten Zapfen mit einem entsprechend kegelförmigen Umfang sitzt. Ferner besitzt der Zapfen eine Ringnut mit zur Längsachse des Zapfens geneigten Nutflanken. In die Nut greift das elastische Element mit einem entsprechenden Vorsprung formschlüssig ein. Bei einer axialen Stoßbelastung gleitet der Vorsprung aus der Ringnut und das elastische Element wird vom Zapfen abgeschoben, so dass die Wischeranlage in die Fahrzeugkarosserie zurückweicht, bis sie an einem anderen Teil anstößt.

In einer Ausgestaltung ist das elastische Element direkt an einer Öffnung im Karosserieblech angeordnet und mit dieser formschlüssig verbunden. Der Zapfen sitzt als Hohlzapfen fest auf dem Lagergehäuse. Bei einer axialen Stoßbelastung im Bereich der Antriebswelle des Scheibenwischers wird der Zapfen aus dem elastischen Element gedrückt, wobei dieses unter Energieaufnahme komprimiert wird, sodass das Lagergehäuse bis zur Anlage des Scheibenwischers am Karosserieblech zurückweichen kann. In beiden Ausgestaltungen kann die zum Lösen erforderliche Kraft durch die geometrische Gestaltung des Zapfens und durch den eingesetzten elastischen Werkstoff variiert werden.

Aus der DE 198 33 158 A1 ist eine Befestigung für eine Rohrplatine bekannt. Danach ist ein gummielastisches Entkopplungselement der Innenkontur des Platinenrohrs im Bereich der Befestigungsbohrung angepasst. Es ragt durch Öffnungen der Befestigungsbohrung mit einem Überstand heraus und überdeckt innen die Öffnung in axialer Richtung zu beiden Seiten. Durch den Überstand und die Überdeckung ist das Entkopplungselement in axialer und radialer Richtung durch Formschluss gesichert. Um die Spannkräfte der Befestigungsschrauben auf das Entkopplungselement zu begrenzen, ist in das Entkopplungselement eine Distanzbuchse eingesetzt. Nach einem vorbestimmten Spannweg kommt die Distanzbuchse stirnseitig zur Anlage und überträgt die Schraubenkräfte, so weit sie die gewünschte Vorspannung übersteigen.

Die EP-A2-0 916 559 zeigt in ihrem Ausführungsbeispiel nach Fig. 16 ein Wischerlager, bei dem die Wischerwelle in einem Lagergehäuse drehbar gelagert ist. Das Lagergehäuse, das aus Kunststoff hergestellt ist, besitzt einen Basisteil, einen Gehäuseflansch, mit dem es an der Karosserie anliegt. Der Gehäuseflansch besitzt konische Bohrungen für Schrauben mit einem konischen Teil 51a, der zur konischen Schraubenbohrung passt. Die Schraube wird mit ihrem zylindrischen Gewindeteil durch eine Öffnung des Karosserieblechs gesteckt und mit einer Mutter am Karosserieblech befestigt. Die Durchmesser der Schraubenbohrung und des konischen Teils der Schraube nehmen zur Karosserie hin ab, sodass das Lagergehäuse durch die Schraube an der Karosserie durch Formschluss befestigt und fixiert ist. Die Durchmesser der Schraubenbohrung und des konischen Teils der Schraube sind unter Berücksichtigung der Härte des synthetischen Kunststoffs des Lagergehäuses so gewählt, dass die Schraubenbohrung ihren Durchmesser vergrößert und sich der Flansch in Folge seiner eigenen Elastizität gegenüber dem konischen Teil verformt, wenn die Last, die einen Wert gleich oder größer als einen vorbestimmten Wert hat, auf die Wischerachse von der oberen Seite wirkt und dabei den Flansch mit dem Lagergehäuse von dem konischen Teil entfernt.

### Vorteile der Erfindung.

Nach der Erfindung wird durch eine axiale Vorspannung des Befestigungselements eine definierte Reibkraft zwischen der inneren und/oder äußeren Umfangsfläche des Befestigungselements und dem angrenzenden Bauteil erzeugt. Die Reibkraft ist so definiert, dass die Platine einer Wischeranlage, welche beispielsweise das angrenzende Bauteil bildet, im Normalbetrieb sicher an der Fahrzeugkarosserie befestigt ist. Nur wenn bei einem Aufprall die Wischeranlage von einer axial wirkenden Kraft belastet wird, die die definierte Reibkraft überschreitet, wird die Verbindung zwischen der Fahrzeugkarosserie und der Platine gelöst. Die Wischeranlage wird entsprechend der Forderung nach einem geringeren Verletzungsrisiko für Personen außerhalb des Kraftfahrzeugs in Richtung des Inneren der Fahrzeugkarosserie verschoben. Die Reibkraft und damit die dem Aufprall entgegen wirkende Kraft kann durch die Größe der Vorspannung sehr genau bestimmt werden.

Zum Befestigen der Wischeranlage werden bewährte Prinzipien angewendet, so dass die Befestigungspunkte an der Wischeranlage und der Fahrzeugkarosserie bestehen bleiben können und keine Neukonstruktion notwendig ist. Das gummielastische und schwingungsdämpfende Befestigungselement sitzt mit seinem äußeren Umfang in einer Aufnahmeöffnung, die in der Regel von einem Befestigungsauge der Platine gebildet wird. Es besitzt eine zentrale Durchgangsöffnung, die auf einem Befestigungszapfen sitzt. Dieser ist mit der Fahrzeugkarosserie fest verbunden. Es sind jedoch auch Lösungen möglich, bei denen die Aufnahmeöffnung der Fahrzeugkarosserie und der Zapfen der Wischeranlage zugeordnet sind. Bei der Montage wird das Befestigungselement axial zusammengedrückt, wodurch es sich im Durchmesser vergrößert und an der Aufnahmeöffnung bzw. am Zapfen abstützt. Die Vorspannung erzeugt an den Kontaktflächen definierte Reibkräfte, die die Wischeranlage an der Fahrzeugkarosserie fixieren, bis eine axial wirkende Kraft auftritt, die die Reibkräfte übersteigt. Die Größe der Reibkraft hängt im Wesentlichen von dem Vorspannweg, den Materialeigenschaften des Befestigungselements, seiner geometrischen Gestalt, seinem Volumen und dem Verhältnis der umschlossenen Oberfläche, der so genannten Verlustfläche, zur freien Oberfläche ab.

Gemäß einer Ausgestaltung der Erfindung kann die Reibkraft bei sonst gleichen Einflussfaktoren durch den Vorspannweg abgestimmt werden, der durch Anschläge, z.B. eine Distanzhülse begrenzt wird. Ferner können die sich berührenden Flächen zwischen dem Befestigungselement, dem Befestigungsauge und dem Zapfen zylindrisch oder konisch in einer Richtung verlaufen. Bei der zylindrischen Gestalt erzeugt die Vorspannung eine Anpresskraft ohne axiale Kraftkomponente, während sie bei einer konischen Ausbildung der Flächen je nach Richtung des Konus eine Kraftkomponente in Richtung der axial wirkenden Haltekraft oder in entgegengesetzter Richtung erzeugt, wodurch die Axialkraft, die zum Lösen der Befestigung erforderlich ist, erhöht bzw. verringert wird. Die durch die Reibkraft erzielte kraftschlüssige Verbindung kann ferner durch einen Formschluss unterstützt werden, z.B. in Form von verschiedenen Haltewülsten am Befestigungselement oder am Zapfen bzw. Befestigungsauge, die in entsprechende Ausnehmungen des jeweils anderen angrenzenden Teils eingreifen.

In einer Ausgestaltung der Erfindung ist das Befestigungselement am Ende eines an der Fahrzeugkarosserie angebrachten Befestigungszapfens angeordnet und weist im mittleren Bereich eine Ringnut auf. Es stützt sich in Richtung der Axialkraft mit dem Nutboden an einer Anlagefläche ab, welche durch die zylindrische Aufnahmeöffnung der Platine gebildet wird. Da der Durchmesser der Anlagefläche kleiner ist als der innere Durchmesser der Ringnut, besteht zwischen dem Befestigungselement und der Platine in diesem Bereich eine Reibkraft. Die Reibkraft wird ebenfalls über das Volumen und den Reibwert des Befestigungselements sowie eine zentrale Hülse definiert, die die axiale Vorspannung des Befestigungselements begrenzt.

Nach einer Ausgestaltung der Erfindung ist unter dem Befestigungselement eine Anlagescheibe angeordnet. Durch sie kann die freie Oberfläche des Befestigungselements variiert werden. Die Anlagescheibe weist zweckmäßigerweise eine Sollbruchstelle auf, die beim Überschreiten einer zulässigen Axialkraft bricht. Vorteilhafterweise hat die Sollbruchstelle den gleichen Durchmesser wie der Befestigungszapfen, so dass das Befestigungselement axial nachgeben kann. Dadurch verringert sich die eingeschlossene Oberfläche des Befestigungselements und die Anpresskraft an der Reibverbindung, die sich nun ebenfalls unter dem Einfluss der Axialkraft löst. Da der Befestigungszapfen mit dem Befestigungselement nach dem Lösen der Wischeranlage stehen bleibt und so gefährlich nach oben ragt, kann diese Befestigungsmöglichkeit allerdings nur außerhalb eines möglichen Aufprallbereichs eingesetzt werden. Ist der Befestigungszapfen an der Platine angeordnet und gleitet er nach Einwirken einer Axialkraft durch die Aufnahmeöffnung in den Innenraum der Fahrzeugkarosserie, kann der Befestigungspunkt auch im Aufprallbereich angeordnet werden.

Bei einer weiteren Ausgestaltung der Erfindung ist ein Befestigungselement mit einem elastisch verformbaren, holen mittleren Bereich vorgesehen. Beim Einwirken einer Axialkraft knickt dieses Befestigungselement zuerst im mittleren Bereich ein, bevor sich z.B. die kraftschlüssige bzw. formschlüssige Verbindung löst. Der Aufprall wird.dadurch sanfter abgefangen, wobei ein Teil der Aufprallenergie vernichtet wird. Ferner nimmt das Befestigungselement vorteilhafterweise kleinere Axialkräfte auf, ohne dass die Befestigung der Wischeranlage gelöst wird.

Alle Ausgestaltungen der Erfindung sind einfach und somit kostengünstig zu montieren. Zudem ist eine Instandsetzung der Wischeranlage nach einem Fußgängeraufprall einfach, da die gelösten Bauteile nur wieder neu montiert werden müssen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Darstellung einer Platine einer Wischeranlage,
- Fig. 2: einen Schnitt durch ein Befestigungsauge einer Wischeranlage im montierten Zustand,
- Fig. 3 bis 4: Varianten zu Fig. 2,
- Fig. 5- 7: Varianten eines Befestigungselements und
- Fig. 8-11: Varianten zu Fig. 2.

### Beschreibung der Ausführungsbeispiele

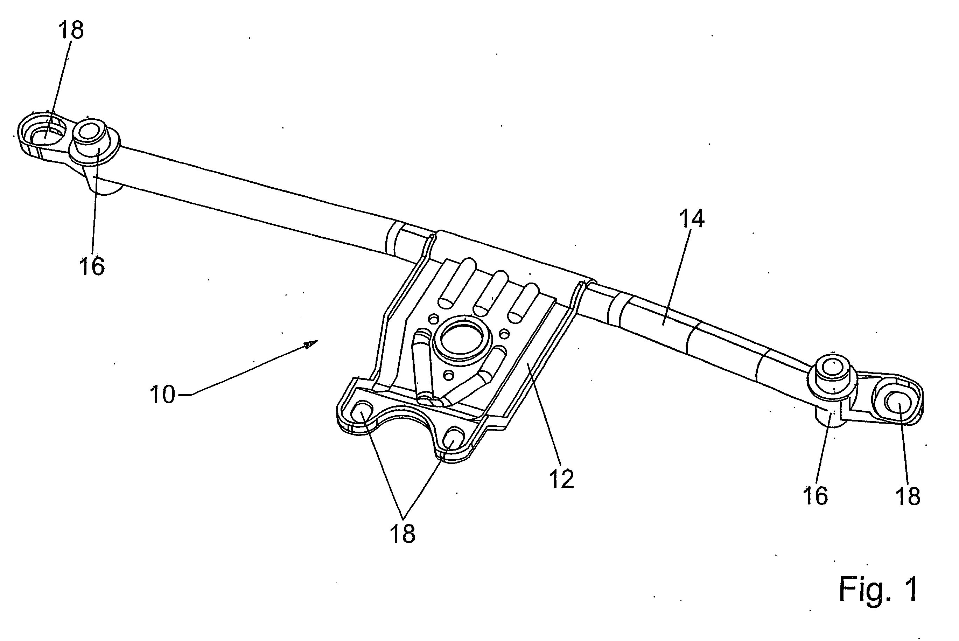

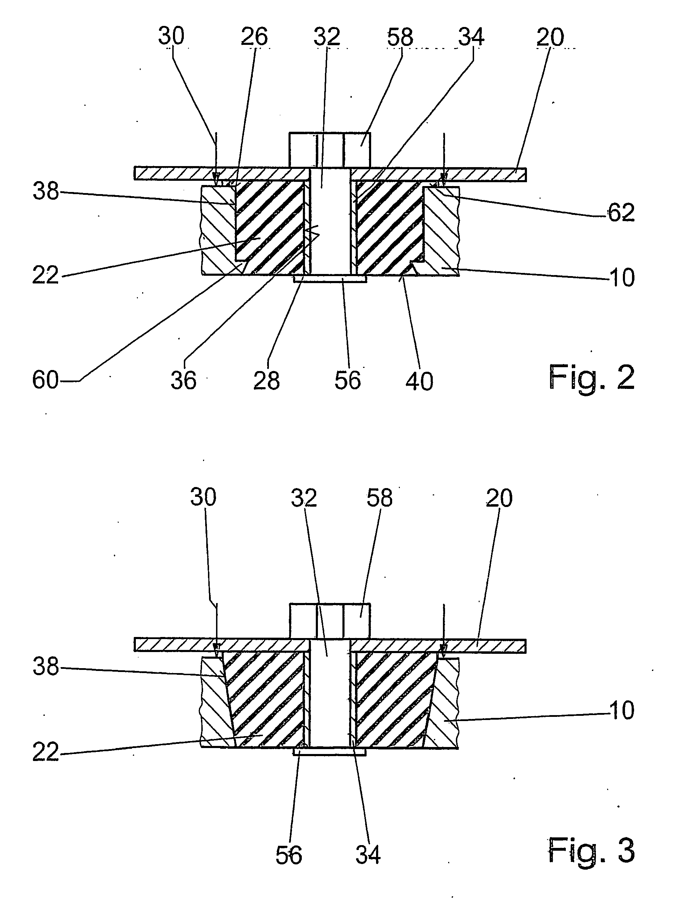

Eine Platine 10 einer Wischeranlage besteht aus einer Motorplatine 12 und einem Platinenrohr 14 (Fig. 1). Während die Motorplatine 12 einen nicht dargestellten Wischerantrieb trägt, sind an den Enden des Platinenrohrs 14 Wischerlager 16 angeordnet. Die Platine 10 wird über Befestigungsaugen 18, die an den Gehäusen der Wischerlager 16 und an der Motorplatine 12 angeformt sind, an einer Fahrzeugkarosserie 20 befestigt. Das Befestigungsauge 18 besitzt eine Aufnahmeöffnung 26 für ein gummielastisches Befestigungselement 22, welches gleichzeitig schwingungsdämpfend zwischen der Platine 10 und der Fahrzeugkarosserie 20 wirkt (Fig.2).

Das Befestigungselement 22 weist eine zentrale Durchgangsöffnung 28 für einen Befestigungszapfen 32 auf. Dieser stützt sich an einem Ende mit einem angeformten Bund 56 an einer Stirnfläche 40 des Befestigungselements 22 ab, während das andere Ende mit Hilfe einer Schraubenmutter 58 an der Fahrzeugkarosserie 20 angeschraubt ist. Zwischen dem Befestigungszapfen 32 und dem Befestigungselement 22 ist eine Hülse 34 angeordnet, welche die Spannkräfte der Schraubverbindung begrenzt, wenn sie nach einem vorbestimmten Spannweg stirnseitig an der Fahrzeugkarosserie 20 zur Anlage kommt.

Im montierten Zustand wird das Befestigungselement 22 zusammengedrückt und schmiegt sich mit einer inneren Umfangsfläche 36 an der Hülse 34 und mit einer äußeren Umfangsfläche 38 an die Kontur der Aufnahmeöffnung 26 der Platine 10 an. Durch axiale Vorspannung vergrößert sich der Umfang des Befestigungselements 22, so dass zwischen den Berührungsflächen eine Anpresskraft und eine Reibkraft erzeugt werden, die die Platine 10 an der Fahrzeugkarosserie fixieren. Tritt bei einem Aufprall eine Axialkraft 30 auf, die den Wert der Reibkraft überschreitet, löst sich die Platine 10 vom Befestigungselement 22.

Die Reibkraft wird durch ihre Einflussgrößen so eingestellt, dass durch einen Aufprall Personen nicht zu Schaden kommen. Bei der Ausführung nach Fig. 2 besitzt das Befestigungselement eine innere 36 und äußere 38 zylindrisch verlaufende Umfangsfläche. Zu diesen wirken die Anpresskräfte, die durch die Vorspannung erzeugt werden, senkrecht, so dass keine Kraftkomponenten in Richtung einer Axialkraft auftreten. Ferner besitzt die Aufnahmeöffnung 26 im Bereich einer Stirnfläche 40 eine Haltewulst 60, die in das Befestigungselement 22 eingreift und so einen Formschluss bildet, der die Reibkraft unterstützt. Ein angeformter Bund 62 des Befestigungselements 22 dient zur stirnseitigen Schwingungsisolation der Platine 10 gegenüber der Fahrzeugkarosserie 20.

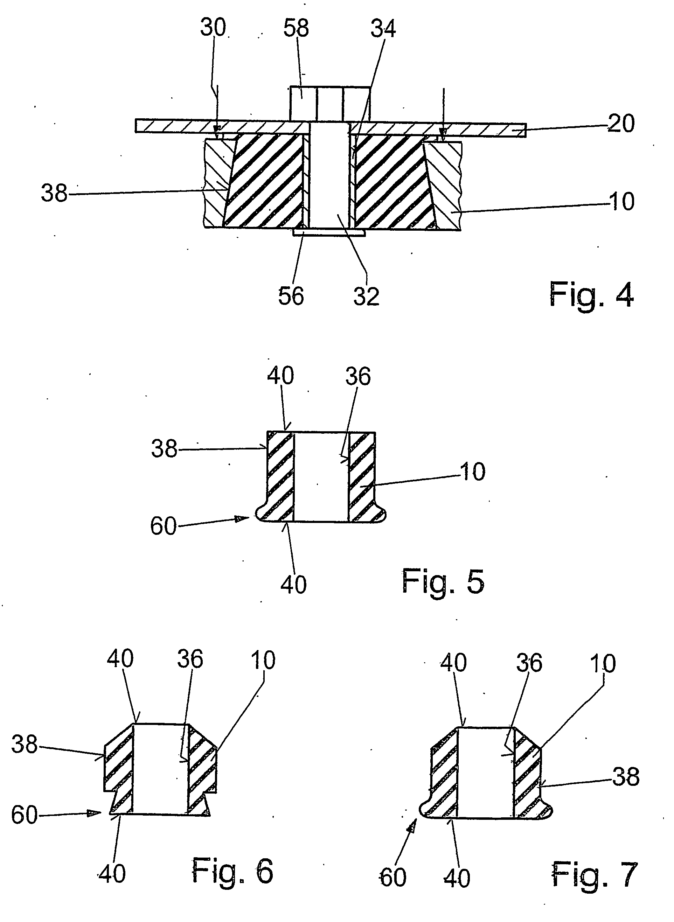

Die äußere Umfangsfläche 38 kann auch konisch verlaufen, wobei der Durchmesser entweder in Richtung zur Fahrzeugkarosserie 20 zunimmt (Fig. 3) oder abnimmt (Fig. 4). Durch die Vorspannung wird entsprechend dem Kegelwinkel eine axiale KraftKomponente erzeugt, die der Haltekraft entgegen wirkt oder sie unterstützt. Ferner kann eine unterschiedlich gestaltete Haltewulst 60 angeformt sein, z.B. in einer vorspringenden, abgerundeten Form (Fig. 5) oder einer kantigen Ausnehmung. Ferner kann das Befestigungselement 22 im Bereich der Stirnfläche 40 kegelstumpfförmig ausgebildet sein (Fig. 6, Fig. 7). Um die Reibkraft entsprechend den Forderungen und den gegebenen Platzverhältnissen möglichst exakt zu definieren, können die Formvarianten beliebig kombiniert werden.

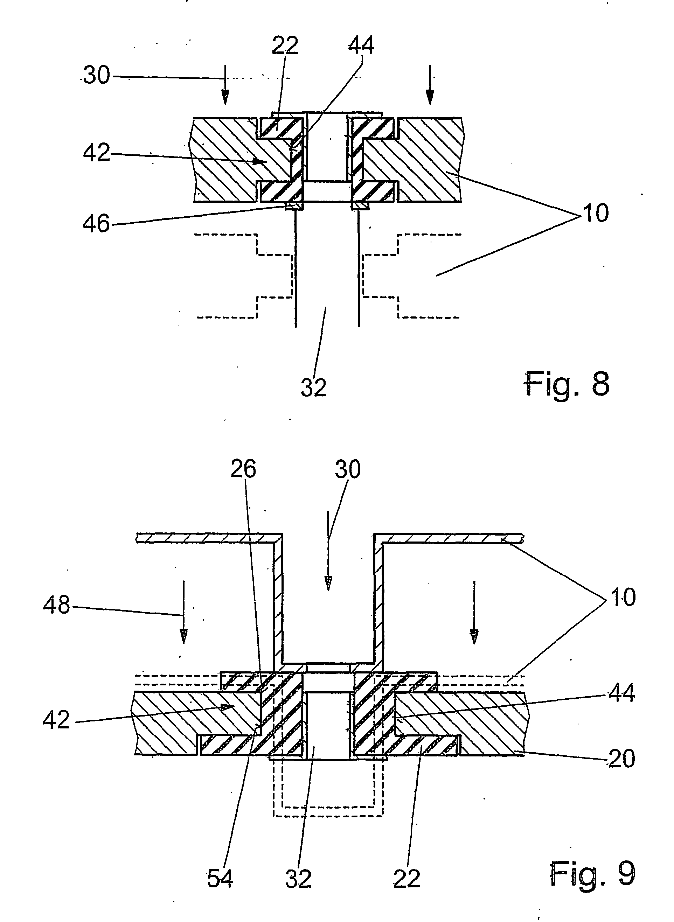

In der Ausgestaltung nach Fig. 8 weist das Befestigungselement 22 eine Ringnut 42 auf, welche sich in Richtung der Axialkraft 30 an einer Anlagefläche 44 abstützt. Damit zwischen der Platine 10 und dem Befestigungselement 22 eine Reibkraft entsteht, ist der Durchmesser der Auflagefläche 44 kleiner als der innere Durchmesser der Ringnut 42. In dieser Ausgestaltung wird die Größe der Reibkraft neben dem Reibwert und dem Volumen des Befestigungselements 22 maßgeblich über den Durchmesserunterschied bestimmt. Das Befestigungselement 22 ist am Ende des Befestigungszapfens 32 angeordnet und stützt sich zusätzlich an einer Anlagescheibe 46 mit einer Sollbruchstelle ab. Übersteigt die Axialkraft 30 einen zulässigen Wert, rutscht die Platine 10 aus der Ringnut 42. Gleichzeitig bricht die Anlagescheibe 46 an der Sollbruchstelle und die Platine 10 gleitet entlang des Befestigungszapfens 32 in den Innenraum der Fahrzeugkarosserie 20. Die Lage der Platine 10 in diesem Zustand ist in Fig. 8 durch eine gestrichelte Linie dargestellt. Der Befestigungszapfen 32 mit dem Befestigungselement 22 bleibt stehen und ragt nach oben. Daher wird er zweckmäßigerweise außerhalb eines möglichen Aufprallbereichs einer Person angeordnet.

Eine Alternative hierzu ist in Fig. 9 dargestellt. Hier ist der Befestigungszapfen 32 an der Platine 10 befestigt und weist an dem der Fahrzeugkarosserie 20 zugewandten Ende ein Befestigungselement 22 mit einer Ringnut 42 auf. Dieses stützt sich mit dem Nutboden 54 an der Anlagefläche 44 ab, welche durch eine zylindrische Aufnahmeöffnung 26 in der Fahrzeugkarosserie 20 gebildet wird. Ist die Axialkraft 30 größer als die Haltekraft, löst sich das Karosserieblech 20 aus der Ringnut 42 und der Befestigungszapfen 32 rutscht in die Aufnahmeöffnung 26 bis angrenzende Bauteile der Platine 10 an der Fahrzeugkarosserie 20 auftreffen. Dabei verlagert sich die Platine 10 in Richtung 48 und nimmt die durch eine gestrichelte Linie dargestellte Position ein, wobei das Befestigungselement 22 aus der Aufnahmeöffnung gedrückt wird.

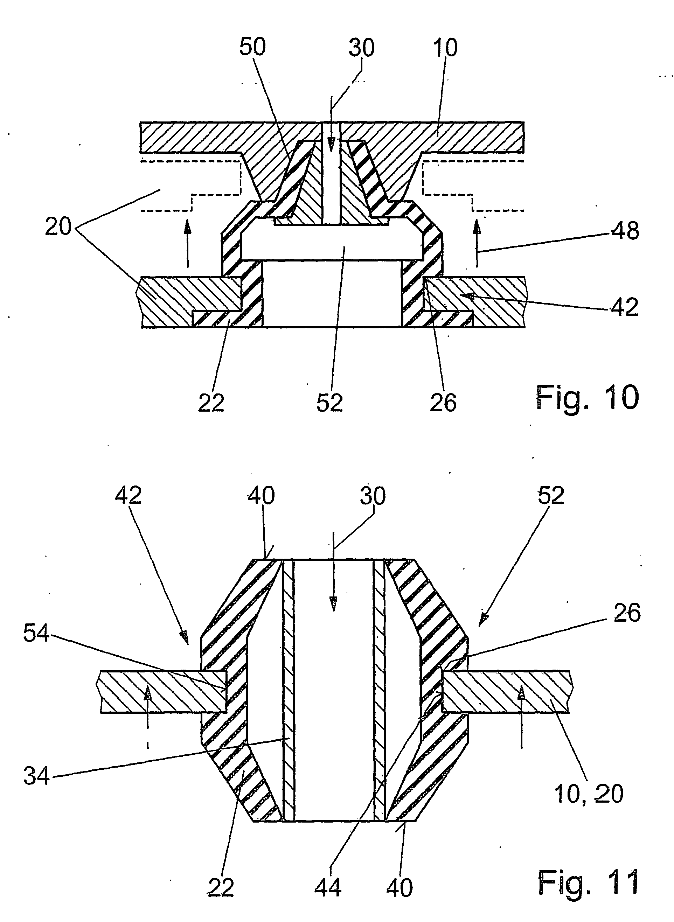

Fig. 10 zeigt eine weitere Ausgestaltung, nach der das Befestigungselement 22 an einem Ende durch eine kegelstumpfförmige Klemmverbindung 50 mit der Platine 10 verbunden ist, während das andere Ende die schon beschriebene Ringnut 42 aufweist. Beide Enden sind durch einen mittleren Bereich 52 verbunden, der hohl und elastisch verformbar ist. Dieser nimmt durch seine Elastizität zunächst axiale Kräfte auf. Steigt die Axialkraft 30 weiter an, knickt er mehr und mehr ein, bis sich bei einem bestimmten Wert der Axialkraft 30 das Befestigungselement 22 aus der Fahrzeugkarosserie 20 ausklinkt und sich entgegen der Richtung 48 relativ zur Fahrzeugkarosserie verlagert, was in der Figur durch gestrichelte Linien dargestellt ist.

Wird der mittlere Bereich 52 mit einer zentralen Hülse 34 kombiniert und die Ringnut 42 ebenfalls in der Mitte des Befestigungselements 22 angeordnet, entsteht eine weitere Ausgestaltung (Fig. 11). Das Befestigungselement 22 weist im Bereich der Stirnflächen 40 kegelstumpfförmige Enden auf, die gegeneinander verspannt werden. Durch die axiale Vorspannung wölbt sich der mittlerer Bereich 52 des Befestigungselements 22 nach außen, der Nutboden 54 wird gegen die Anlagefläche 44 der Aufnahmeöffnung 26 gepresst und die Enden im Bereich der Stirnflächen 40 stützen sich radial an der Hülse 34 ab. Nach Einwirken einer Axialkraft 30 von definiertem Wert gleitet das Befestigungselement 22 durch die Aufnahmeöffnung 26, die durch die Platine 10 oder die Fahrzeugkarosserie 20 gebildet werden kann.

## Patentansprüche

1. Befestigung einer Wischeranlage (10) an einer Fahrzeugkarosserie (20) mittels eines gummielastischen Befestigungselements (22), das am Umfang in einer Aufnahmeöffnung (26) der Wischeranlage (10) oder der Fahrzeugkarosserie (20) und mit einer Durchgangsöffnung (28) auf einem Zapfen (32) des jeweils anderen Teils sitzt, wobei die Verbindung zwischen der Wischeranlage (10) und der Fahrzeugkarosserie (20) durch eine definierte Axialkraft (30) in Richtung des Inneren der Fahrzeugkarosserie (20) lösbar ist, **dadurch gekennzeichnet, dass** durch eine axiale Vorspannung des Befestigungselements (22) eine definierte Reibkraft zwischen der inneren und/oder äußeren Umfangsfläche (36, 38) des Befestigungselements (22) und dem angrenzenden Bauteil (10, 20, 32) erzeugt wird.

2. Befestigung nach Anspruch 1, **dadurch gekennzeichnet, dass** ein Anschlag vorgesehen ist, der die axiale Verformung des Befestigungselements (22) bei der Montage begrenzt.

3. Befestigung nach Anspruch 2, **dadurch gekennzeichnet, dass** der Anschlag durch eine Hülse (34) gebildet wird, die den. Befestigungszapfen (32) umgibt.

4. Befestigung nach einem der vorhergehenden Ansprüche, **dadurch gekennzeichnet, dass** das Befestigungselement (22) mit einer konischen inneren oder äußeren Umfangsfläche (36, 38) in der entsprechend gestalteten Aufnahmeöffnung (26) bzw. auf dem entsprechenden Zapfen (32) sitzt.

5. Befestigung nach einem der Ansprüche 1 bis 3, **dadurch gekennzeichnet, dass** die Umfangsflächen (36, 38) im wesentlichen zylindrisch verlaufen.

6. Befestigung nach einem der vorhergehenden Ansprüche, **dadurch gekennzeichnet, dass** das Befestigungselement (22) zusätzlich zum Kraftschluss durch einen axial wirkenden Formschluss in der Aufnahmeöffnung (26) bzw. auf dem Zapfen (32) gehalten ist.

7. Befestigung nach einem der vorhergehenden Ansprüche, **dadurch gekennzeichnet, dass** ein Ende des Befestigungselements (22) eine kegelstumpfförmige Stirnfläche (40) aufweist.

8. Befestigung nach einem der Ansprüche 6 oder 7, **dadurch gekennzeichnet, dass** das Befestigungselement (22) eine Ringnut (42) aufweist und sich in Richtung der Axialkraft (30) an einer Auflagefläche (44) abstützt, deren Durchmesser kleiner ist als der innere Durchmesser der Ringnut (42).

9. Befestigung nach einem der vorhergehenden Ansprüche, **dadurch gekennzeichnet, dass** sich das Befestigungselement (22) in Richtung der Axialkraft (30) an einer Anlagescheibe (46) abstützt, die eine der zulässigen Axialkraft (30) entsprechende Sollbruchstelle besitzt.

10. Befestigung nach einem der vorhergehenden Ansprüche, **dadurch gekennzeichnet, dass** die Wischeranlage über einen Zapfen (32) von außen an einem Karosserieblech der Fahrzeugkarosserie (20) befestigt ist, und der Zapfen (32) beim Auftreten der maximalen Axialkraft (30) in die Karosserie (20) eintaucht.

11. Befestigung nach einem der Ansprüche 1 bis 9, **dadurch gekennzeichnet, dass** das Befestigungselement (22) an einem Ende durch eine kegelstumpfförmige Klemmverbindung (50) mit der Wischeranlage (24) verbunden ist und über einen elastisch verformbaren, hohlen mittleren Bereich (52) mit dem anderen Ende verbunden ist, der formschlüssig über eine Ringnut (42) in der Aufnahmeöffnung (26) sitzt.

12. Befestigung nach einem der vorhergehenden Ansprüche, **dadurch gekennzeichnet, dass** das Befestigungselement (22) kegelstumpfförmige Stirnflächen (40) und im mittleren Bereich (52) eine Ringnut (42) aufweist, wobei der mittlere Bereich (52) durch die Vorspannung sich nach außen wölbt, so dass der Nutboden (54) gegen die Anlagelagefläche (44) gepresst wird, während sich die Enden im Bereich der Stirnflächen (40) an der Hülse (34) abstützen.

## Claims

1. Fixation of a wiper system (10) on a vehicle body (20) by means of a rubber-elastic fixing element (22) which sits on the circumference in a receiving opening (26) of the wiper system (10) or of the vehicle body (20) and, by means of a through-opening (28), sits on a stud (32) of the other part in each case, with the connection between the wiper system (10) and the vehicle body (20) being releasable by a defined axial force (30) in the direction of the interior of the vehicle body (20), **characterized in that** a defined frictional force between the inner and/or outer circumferential surface (36, 38) of the fixing element (22) and the adjacent component (10, 20, 30) is produced by axial prestressing of the fixing element (22).

2. Fixation according to Claim 1, **characterized in that** a stop is provided which limits the axial deformation of the fixing element (22) during installation.

3. Fixation according to Claim 2, **characterized in that** the stop is formed by a sleeve (34) which surrounds the fixing stud (32).

4. Fixation according to one of the preceding claims, **characterized in that** the fixing element (22) sits with a conical inner or outer circumferential surface (36, 38) in the correspondingly configured receiving opening (26) or on the corresponding stud (32).

5. Fixation according to one of Claims 1 to 3, **characterized in that** the circumferential surfaces (36, 38) run essentially cylindrically.

6. Fixation according to one of the preceding claims, **characterized in that** the fixing element (22) is held in the receiving opening (26) or on the stud (32) by an axially acting interlocking connection in addition to the frictional connection.

7. Fixation according to one of the preceding claims, **characterized in that** one end of the fixing element (22) has a frustoconical end surface (40).

8. Fixation according to either of Claims 6 and 7, **characterized in that** the fixing element (22) has an annular groove (42) and is supported in the direction of the axial force (30) on a supporting surface (44), the diameter of which is smaller than the inner diameter of the annular groove (42).

9. Fixation according to one of the preceding claims, **characterized in that** the fixing element (22) is supported in the direction of the axial force (30) on a bearing disc (46) which has a predetermined breaking point corresponding to the permissible axial force (30).

10. Fixation according to one of the preceding claims, **characterized in that** the wiper system is fixed from the outside on a body panel of the vehicle body (20) via a stud (32), and the stud (32) enters the body (20) when the maximum axial force (30) occurs.

11. Fixation according to one of Claims 1 to 9, **characterized in that** the fixing element (22) is connected at one end by a frustoconical clamping connection (50) to the wiper system (24) and is connected via an elastically deformable, hollow, central region (52) to the other end which sits in the receiving opening (26) in an interlocking manner via an annular groove (42).

12. Fixation according to one of the preceding claims, **characterized in that** the fixing element (22) has frustoconical end surfaces (40) and an annular groove (42) in the central region (52), the central region (52) arching outwards because of the prestressing, so that the groove base (54) is pressed against the bearing surface (44) while the ends are supported in the region of the end surfaces (40) on the sleeve (34).

## Revendications

1. Fixation d'une installation d'essuie-glace (10) à une carrosserie de véhicule (20) à l'aide d'un élément de fixation (22) élastique comme du caoutchouc, monté par sa périphérie dans une ouverture de réception (26) de l'installation d'essuie-glace (10) ou de la carrosserie (20) du véhicule et ayant un orifice traversant (28) engagé sur un goujon (32) de l'autre pièce respective, la liaison entre l'installation d'essuie-glace (10) et la carrosserie (20) du véhicule étant détachable sous l'effet d'une force axiale (30), définie, en direction de l'intérieur de la carrosserie (20),
**caractérisée en ce qu'**
une précontrainte axiale de l'élément de fixation (22) génère une force de friction définie entre la surface périphérie intérieure et/ou extérieure (36, 38) de l'élément de fixation (22) et la pièce adjacente (10, 20, 32).

2. Fixation selon la revendication 1,
**caractérisée par**
une butée qui délimite la déformation axiale de l'élément de fixation (22) au montage.

3. Fixation selon la revendication 2,
**caractérisée en ce que**
la butée est formée par un manchon (34) entourant le goujon de fixation (32).

4. Fixation selon l'une des revendications précédentes,
**caractérisée en ce que**
l'élément de fixation (22) a une surface périphérique intérieure ou extérieure (36, 38) conique, installée dans un orifice de réception (26) ou sur un goujon (32) de forme correspondante.

5. Fixation selon l'une des revendications 1 à 3,
**caractérisée en ce que**
les surfaces périphériques (36, 38) sont principalement cylindriques.

6. Fixation selon l'une des revendications précédentes,
**caractérisée en ce que**
l'élément de fixation (22) est tenu en plus par une liaison par la force par une pièce de forme agissant axialement dans l'orifice de réception (26) ou sur le goujon( 32).

7. Fixation selon l'une des revendications précédentes,
**caractérisée en ce qu'**
une extrémité de l'élément de fixation (22) comporte une surface frontale (40) tronconique.

8. Fixation selon l'une des revendications 6 ou 7,
**caractérisée en ce que**
l'élément de fixation (22) comporte une gorge annulaire (42) et s'appuie dans la direction de la force axiale (30) contre une surface d'appui (44) dont le diamètre est inférieur au diamètre intérieur de la rainure annulaire (42).

9. Fixation selon l'une quelconque des revendications précédentes,
**caractérisée en ce que**
l'élément de fixation (22) s'appuie dans la direction de la force axiale (30) contre un disque d'appui (46) ayant un point de rupture de consigne correspondant à la force axiale (30) autorisée.

10. Fixation selon l'une quelconque des revendications précédentes,
**caractérisée en ce que**
l'installation d'essuie-glace est fixée par un goujon (32), par l'extérieur, à une tôle de la carrosserie (20) du véhicule et le goujon (32) pénètre dans la carrosserie (20) sous l'effet de la force axiale maximale (30).

11. Fixation selon l'une des revendications 1 à 9,
**caractérisée en ce que**
une extrémité de l'élément de fixation (22) est reliée par une liaison de serrage (50) en forme de tronc de cône à l'installation d'essuie-glace (24) et par l'autre extrémité est reliée par l'intermédiaire d'une zone (52) élastiquement déformable, centrale creuse, qui vient par une liaison de forme par une gorge annulaire (42) dans le logement de réception (26).

12. Fixation selon l'une quelconque des revendications précédentes,
**caractérisée en ce que**
l'élément de fixation (22) comporte des surfaces frontales (40) en forme de tronc de cône et d'une gorge annulaire (42) dans la zone médiane (52), (52) bombée vers l'extérieur sous l'effet de la précontrainte pour que le fond (54) de la gorge soit pressé contre la surface d'appui (44) alors que les deux extrémités s'appuient au niveau des surfaces frontales (40) contre le manchon (34).
